# FASCICULE DE BREVET EUROPEEN

(11) **EP 4 684 100 B1**
(45) Date de publication et mention de la délivrance du brevet: **07.10.2026**
(21) Numéro de dépôt: 24719596.9
(22) Date de dépôt: 20.03.2024
(51) Int. Cl.: F01D 5/08

(54) **CARTER D'INJECTION D'AIR POUR TURBOMACHINE**
LUFTEINSPRITZGEHÄUSE FÜR EINE TURBOMASCHINE
AIR INJECTION CASING FOR A TURBOMACHINE

(30) Priorité: 23.03.2023 FR 2302735
(43) Date de publication de la demande: 28.01.2026
(73) Titulaire: SAFRAN AIRCRAFT ENGINES, 75015 Paris (FR)
(72) Inventeur: LEMONNIER, Jérôme Claude George, 77550 MOISSY-CRAMAYEL (FR); BOISNAULT, Franck Davy, 77550 MOISSY-CRAMAYEL (FR); GARIN, Fabrice Marcel Noël, 77550 MOISSY-CRAMAYEL (FR); BONNEAU, Damien, 77550 MOISSY-CRAMAYEL (FR); TOUCHARD, Delphine, 77550 MOISSY-CRAMAYEL (FR)
(74) Mandataire: Cabinet Beau de Loménie
(86) Numéro de dépôt international: PCT/FR2024/050329
(87) Numéro de publication internationale: WO 2024/194566

(56) Documents cités:
- WO-A1-2020/131030
- US-A- 3 989 410
- US-A- 5 402 636
- US-A- 6 095 750

## Description

### Domaine Technique

Le présent exposé concerne les moteurs de turbomachine, et plus précisément les carters d'admission d'air pour le refroidissement des pièces chaudes.

### Technique antérieure

La conception des circuits de ventilation d'une turbomachine aéronautique est délicate et représente une perte potentielle de performance.

En effet, la turbomachine est d'autant plus performante qu'elle fonctionne à haute température. Cependant, les matériaux la constituant nécessitent alors un refroidissement plus important. Le refroidissement est généralement réalisé par prélèvement d'une partie de l'air de la veine d'air froid, ce qui nuit à la performance générale.

De manière générale, il est connu de prélever de l'air pour le refroidissement radialement sous la chambre de combustion et en aval du dernier étage du disque du compresseur.

L'air prélevé de ces deux sources est alors mélangé puis acheminé vers les aubes ayant besoin d'un refroidissement. Un tel circuit de refroidissement est notamment divulgué dans le document WO 2020/131030.

Cependant, de tels circuits de ventilation présentent certaines limitations qui réduisent leur efficacité et diminuent les performances globales de la turbomachine.

En effet, si l'air prélevé radialement sous la chambre de combustion permet le cycle de refroidissement, il a en revanche été observé que l'air prélevé en aval du dernier étage du disque du compresseur présente une vitesse tangentielle faible. Or le refroidissement des aubes de rotor est d'autant meilleur que la vitesse tangentielle de l'air de refroidissement est importante.

Ainsi, le mélange entre l'air issu de ces deux sources diminue globalement l'efficacité du refroidissement.

Toutefois, il n'est pas souhaitable de se passer de l'air prélevé en aval du dernier étage du disque du compresseur car celui-ci a besoin d'un prélèvement d'air minimum afin de diminuer le risque d'apparition du phénomène de pompage.

Ainsi, il demeure un besoin pour des architectures de refroidissement qui assurent à l'air utilisé pour le refroidissement une vitesse tangentielle plus importante que celle qu'il est possible d'obtenir par les circuits actuels.

### Exposé de l'invention

La présente invention vise précisément à répondre à ce besoin et propose pour cela un carter d'injection d'air de refroidissement pour turbomachine conformément à la revendication 1. Un tel carter présente une forme annulaire autour d'un axe longitudinal définissant une direction axiale et comprend une extrémité amont de carter, une extrémité aval de carter et une paroi principale de carter qui relie l'extrémité amont de carter à l'extrémité aval de carter, la paroi principale de carter présentant une forme annulaire avec un diamètre qui s'agrandit de l'amont vers l'aval, le carter comprenant en outre :
- un logement de mélange d'air, délimité axialement par la paroi principale du carter depuis son extrémité amont et par une paroi d'injecteur qui s'étend vers l'axe longitudinal depuis une paroi sensiblement axiale, laquelle est reliée à son extrémité amont à la paroi principale de carter et délimite radialement le logement de mélange d'air ;
- un logement d'admission d'air, délimité en amont par la paroi d'injecteur et en aval par un disque de rotor haute pression de la turbomachine, le logement d'admission d'air étant en communication fluidique avec l'air en amont de la paroi principale de carter via un injecteur d'air qui présente au moins une entrée d'air d'injecteur ménagée dans la paroi principale de carter et une sortie d'air d'injecteur ménagée dans la paroi d'injecteur;
- un logement de purge d'air délimité par un disque de rotor haute pression de la turbomachine et une paroi sensiblement radiale reliée à la paroi principale de carter, la paroi sensiblement radiale étant en outre reliée à la paroi sensiblement axiale;
- un premier joint d'étanchéité séparant le logement de mélange d'air et le logement d'admission d'air ;
- un deuxième joint d'étanchéité séparant le logement d'admission d'air et le logement de purge d'air;
le carter d'injection présentant en outre un logement de passage d'air délimité par la paroi sensiblement radiale, la paroi principale de carter et la paroi sensiblement axiale, le logement de passage d'air étant en communication fluidique avec le logement de purge d'air au moyen d'orifices ménagés dans la paroi sensiblement radiale, caractérisé en ce que le logement de passage d'air est en communication fluidique avec le logement de mélange d'air via des orifices ménagés dans la paroi sensiblement axiale et en ce que les orifices traversant la paroi sensiblement axiale présentent une inclinaison avec la direction axiale comprise entre 45° et 70°.

Le carter décrit permet d'obtenir un refroidissement amélioré comparativement aux carters décrits dans l'art antérieur.

En effet, la mise en communication fluidique entre le logement de mélange d'air et le logement de purge d'air via le logement de passage d'air et grâce aux orifices ménagés dans les parois radiale et axiale permet avantageusement d'amener l'air de refroidissement ayant une vitesse tangentielle faible hors du circuit de refroidissement.

En effet, en fonctionnement, le logement de purge d'air est mis en dépression du fait de sa proximité avec le bord de fuite du distributeur haute pression.

Du fait de la communication fluidique existant entre les logements de purge d'air, de passage d'air et de mélange d'air ces trois logements vont être mis en dépression.

En revanche, la présence du premier joint d'étanchéité, dit aussi joint d'étanchéité amont et du deuxième joint d'étanchéité, dit aussi joint d'étanchéité aval, va permettre d'assurer que le logement d'admission d'air conserve une pression supérieure à celle des logements de purge d'air, de passage d'air et de mélange d'air.

De ce fait, l'air prélevé en aval du dernier étage du disque du compresseur et qui parvient au logement de mélange d'air ne franchit pas le premier joint d'étanchéité mais passe directement vers le logement de purge d'air par l'intermédiaire du logement de passage d'air.

En revanche, l'air prélevé par l'embouchure d'entrée d'air qui arrive au logement d'admission d'air et qui présente une vitesse tangentielle importante peut servir au refroidissement, sans être mélangé à l'air prélevé en aval du dernier étage du disque du compresseur.

Il est entendu que l'étanchéité mise en jeu n'est pas une étanchéité stricte au sens ou l'air ne pourrait pas passer le joint d'étanchéité, mais une étanchéité relative, le but du joint étant de laisser passer une quantité d'air définie.

En d'autres termes, les joints d'étanchéité amont et/ou aval permettent de maintenir une certaine différence de pression entre le logement d'admission d'air et, respectivement, le logement de mélange d'air ou le logement de purge d'air mais sans interdire complètement le passage de l'air.

Par exemple, du fait de la mise en dépression du logement de purge d'air et incidemment du logement de mélange d'air, l'air admis dans le logement d'admission d'air peut franchir les joints d'étanchéité amont et/ou aval et ainsi parvenir jusqu'aux logements de mélange d'air et/ou de purge d'air.

Dans la présente demande, les termes relatifs de positionnement par exemple « amont », « aval », « interne » et « externe » seront entendus par rapport à l'axe horizontal A du carter définissant la direction axiale, parcouru dans le sens d'écoulement des flux d'air principaux et secondaire de la turbomachine.

Ainsi, un élément dit « amont » sera traversé avant un élément dit « aval » et un élément dit « interne » sera plus proche de l'axe A qu'un élément « externe ».

Dans un mode de réalisation, l'axe A peut être l'axe principal d'une turbomachine.

Un élément sera dit « solidaire » d'un autre, quand bien même il n'y est pas relié, pourvu que les deux éléments appartiennent à une unique pièce, c'est-à-dire qu'il n'y ait pas de moyen de fixation entre les deux.

Le cas échéant, il est précisé quand deux éléments sont « reliés » l'un à l'autre, et il faut alors comprendre qu'ils ont une partie commune.

Dans la présente demande, il sera dit qu'un élément s'étend « sensiblement » dans une direction si les extrémités de l'élément forment avec ladite direction un angle inférieur à 45°, voire inférieur à 20°, mieux inférieur à 10°.

Une telle définition assure qu'une paroi s'étendant « sensiblement selon la direction axiale » empêche un mouvement de l'air dans la direction radiale, sans limiter la forme intrinsèque de la paroi, qui peut alors être droite ou non.

Le carter d'injection d'air de refroidissement selon l'invention permet d'assurer que le logement d'admission d'air n'accueille que de l'air ayant une vitesse tangentielle élevée, lequel est prélevé par l'embouchure d'entrée d'air sous la chambre de combustion.

Ainsi, ce dernier peut être utilisé pour un refroidissement efficace de la partie chaude de la turbomachine.

En outre, ce mode de réalisation permet de s'affranchir de la virole interdisant habituellement la communication fluidique entre le logement de mélange d'air et le logement de passage d'air, lequel n'est habituellement accessible ni depuis le logement de mélange d'air ni depuis le logement de purge d'air.

L'inclinaison des orifices traversant la paroi sensiblement axiale est entendue dans la direction s'éloignant de l'axe principal A.

Une telle inclinaison permet d'usiner facilement les orifices traversant la paroi sensiblement axiale sans nécessiter d'outils spécifiques ou de procédés particuliers, et cela pour toutes les formes particulières de la paroi principale.

Dans un mode de réalisation, les orifices traversant la paroi sensiblement axiale sont situés dans la moitié de la paroi sensiblement axiale la plus proche de la paroi principale, voire à la jonction de la paroi sensiblement axiale avec la paroi principale.

Ce mode de réalisation assure un passage simplifié de l'air via le logement de passage d'air vers le logement de purge d'air.

Dans un mode de réalisation, les orifices traversant la paroi sensiblement radiale présentent une inclinaison avec la direction axiale comprise entre 45° et 85°, de préférence entre 70° et 83°.

Cette inclinaison s'entend comme un angle permettant à l'air de s'éloigner de l'axe principal.

Une telle inclinaison des orifices traversant la paroi sensiblement radiale permet à l'air de générer un minimum de composante de vitesse tangentielle afin d'atténuer les échauffements visqueux dans le logement de purge d'air.

De préférence, ce sont les orifices traversant la paroi sensiblement radiale qui limitent le débit d'air traversant le logement de passage d'air. Dans un mode de réalisation, l'ouverture des orifices traversant la paroi sensiblement axiale est supérieure à l'ouverture des orifices traversant la paroi sensiblement radiale, l'ouverture étant ici définie comme la surface totale d'une paroi qui en est supprimée par les orifices.

Dans un mode de réalisation, les orifices traversant la paroi sensiblement radiale présentent un diamètre compris entre 1 mm et 5 mm.

Dans un mode de réalisation, les orifices traversant la paroi sensiblement radiale sont placés dans une partie radialement externe de la paroi sensiblement radiale.

En d'autres termes, les orifices traversant la paroi sensiblement radiale sont placés dans la moitié la plus externe de la paroi sensiblement radiale.

La moitié la plus externe de la paroi sensiblement radiale s'entend comme la partie de la paroi sensiblement radiale qui représente la moitié de la longueur de la paroi, la plus éloignée de l'axe longitudinal. Par construction, il s'agit de la demi-longueur de la paroi sensiblement radiale la plus proche de la paroi principale.

Ce mode de réalisation permet d'améliorer encore davantage le chemin du flux d'air traversant le logement de passage d'air depuis le logement de mélange d'air jusqu'au logement de purge d'air. En outre, cela permet d'intégrer la présence des orifices sans avoir à déplacer le joint d'étanchéité éventuellement supporté par la paroi sensiblement radiale.

Dans un mode de réalisation, le premier joint d'étanchéité est formé par une première partie disposée sur une surface du disque de rotor haute pression, et une deuxième partie disposée sur un support solidaire de la paroi d'injecteur.

Par exemple, le premier joint d'étanchéité est un joint d'étanchéité qui comprend un élément d'étanchéité monté sur l'extrémité radialement interne de la paroi d'injecteur.

Dans un mode de réalisation, le joint est un joint à labyrinthe et l'élément d'étanchéité est un élément d'étanchéité abradable.

Ce mode de réalisation permet de minimiser la quantité de matière nécessaire pour le carter d'admission d'air en plaçant un élément d'étanchéité abradable sur une paroi par ailleurs utile au carter.

Dans un autre mode de réalisation, le joint à étanchéité auto-adaptative, et l'élément d'étanchéité est une partie mobile d'un tel joint.

Dans un mode de réalisation, le deuxième joint d'étanchéité étant formé par une première partie disposée sur une surface du disque de rotor haute pression et une deuxième partie disposée sur la paroi sensiblement axiale.

Par exemple, le deuxième joint d'étanchéité est un joint qui comprend un élément d'étanchéité monté sur la paroi sensiblement axiale du côté du logement d'admission d'air.

Ce mode de réalisation permet de minimiser la quantité de matière nécessaire pour le carter d'admission d'air en plaçant la cartouche d'abradable sur une paroi par ailleurs utile au carter.

Dans un mode de réalisation, la paroi d'injecteur peut être sensiblement radiale. En effet, elle assure la séparation entre le logement de mélange d'air et le logement d'admission d'air.

Dans un mode de réalisation, la paroi d'injecteur peut être sensiblement radiale tout en présentant une portion qui a également une composante dans la direction radiale.

Par exemple, la paroi d'injecteur peut s'étendre d'amont en aval puis d'aval en amont lorsqu'on la parcourt de son extrémité interne à son extrémité externe.

De manière alternative, elle peut s'étendre d'aval en amont puis d'amont en aval lorsqu'on la parcourt de son extrémité interne à son extrémité externe.

De manière alternative, elle ne s'étend que d'aval en amont ou d'amont en aval lorsqu'on la parcourt de son extrémité interne à son extrémité externe.

La géométrie particulière de la paroi d'injecteur permet de répondre à d'autres exigences de la paroi, comme par exemple un bon support mécanique de l'embouchure d'injection d'air.

Dans un mode de réalisation, le logement de purge d'air peut être disposé radialement au-dessus du logement d'admission d'air.

Selon un autre de ses aspects, l'invention concerne encore une turbomachine aéronautique comprenant un rotor et un carter d'injection d'air de refroidissement tel qu'il vient d'être décrit qui s'étend autour du rotor, le rotor comprenant un disque de rotor haute pression qui délimite le logement d'admission d'air et le logement de purge d'air, le carter d'injection d'air de refroidissement étant disposé en amont du disque de rotor de turbine haute pression.

Dans un mode de réalisation, l'extrémité aval de carter peut comprendre une bride d'attache attachée à une pièce portant un distributeur haute pression, par exemple un pied de distributeur.

Dans un mode de réalisation, l'extrémité aval de carter peut comprendre une bride d'attache attachée à une pièce solidaire de la chambre de combustion, par exemple solidaire d'une paroi de la chambre de combustion.

Dans un mode de réalisation, la turbine haute pression est une turbine haute pression monoétage et bi-étage.

C'est en effet dans de telles turbines, et en particulier les turbines haute pression monoétage, que la dépressurisation du logement de purge permet un bon détour de l'air ayant une composante de vitesse tangentielle trop faible grâce à un carter d'injection décrit plus haut.

### Brève description des dessins

[Fig. 1] La figure 1 représente schématiquement une turbomachine.
[Fig. 2] La figure 2 représente le chemin de refroidissement d'une turbomachine selon l'art antérieur.
[Fig. 3] La figure 3 représente une turbomachine munie d'un carter d'injection d'air selon l'invention.
[Fig. 4] La figure 4 représente sous un premier angle de vue un carter d'injection d'air de refroidissement selon l'invention.
[Fig. 5] La figure 5 représente sous un second angle de vue un carter d'injection d'air de refroidissement selon l'invention, identique à celui de la figure 4.
[Fig. 6] La figure 6 représente des détails d'un carter d'injection d'air dans un mode de réalisation identique à celui de la figure 3.

### Description des modes de réalisation

L'invention est à présent décrite au moyen de figures, présentes à but descriptif pour illustrer certains modes de réalisation de l'invention et qui ne doivent pas être interprétées comme limitant cette dernière. En particulier, les figures ne sont pas représentées à l'échelle, ni même à l'échelle relative.

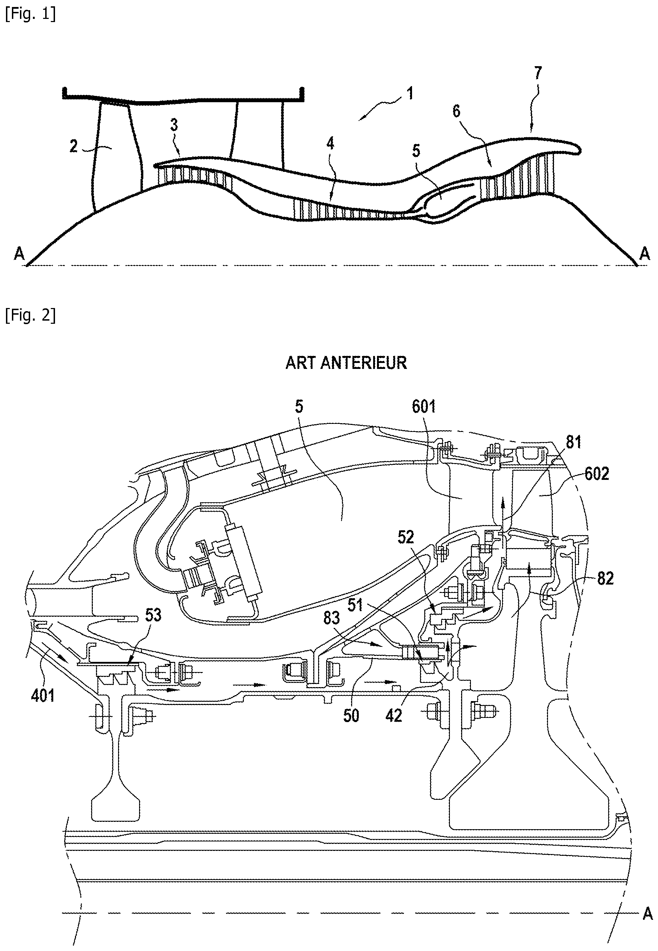

La figure 1 représente, en coupe selon un plan vertical passant par son axe principal A, un turboréacteur à double flux 1. Il comporte d'amont en aval selon la circulation du flux d'air, une soufflante 2, un compresseur basse pression 3, un compresseur haute pression 4, une chambre de combustion 5, une turbine haute pression 6 et une turbine basse pression 7.

La figure 2 représente un circuit de refroidissement selon une architecture de l'art antérieur.

Dans un tel circuit de refroidissement, le chemin de l'air est représenté par des flèches.

Ainsi que cela est représenté, l'air de refroidissement peut provenir en partie d'un prélèvement 401 réalisé en aval du dernier disque du compresseur haute pression et aussi via une embouchure d'admission d'air présente sous la chambre de combustion 5 prélevant l'air 83.

Toutefois, ainsi que cela a été exposé plus haut, le mélange de ces deux flux d'air 401 et 83 dans un logement d'admission d'air 42, pour former le flux de refroidissement 82 n'offre pas une entière satisfaction, car l'air de refroidissement possède alors une vitesse tangentielle assez faible, ce qui diminue ses propriétés de refroidissement.

La figure 2 représente encore le chemin de purge de l'air 81 situé entre le distributeur haute pression 601 et la première aube mobile 602 de la turbine haute pression 6, ainsi que les joints d'étanchéité amont 51 et aval 52 délimitant le logement d'admission d'air 42.

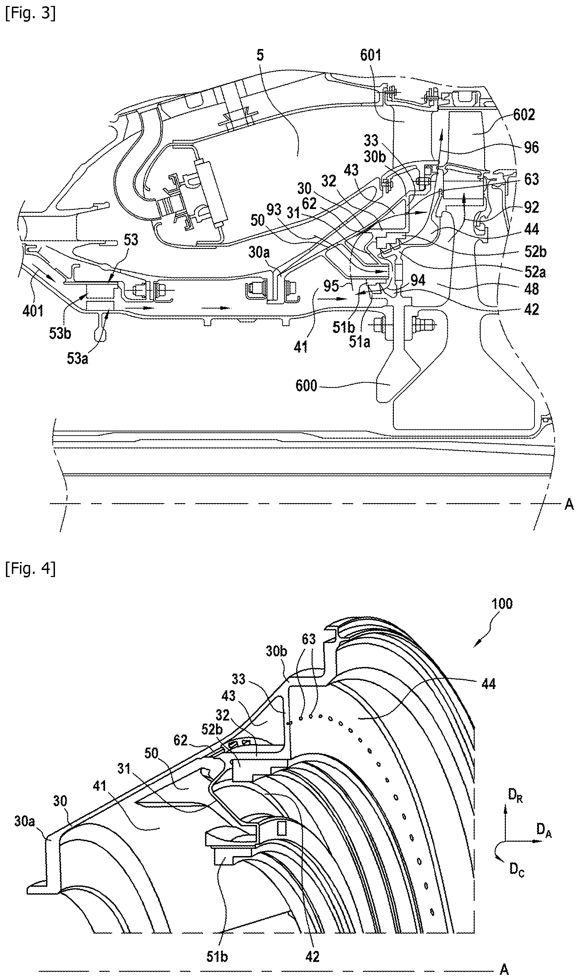

La figure 3 représente un circuit de refroidissement dans lequel le carter d'injection d'air de refroidissement est tel que décrit.

En particulier, il comprend :
- un logement de mélange d'air 41, délimité axialement par la paroi principale du carter 30 depuis son extrémité amont 30a et par une paroi d'injecteur 31 solidaire de la paroi principale de carter qui s'étend vers l'axe longitudinal A, la paroi d'injecteur 31 étant reliée à une paroi sensiblement axiale 32 qui délimite radialement le logement de mélange d'air 41 ;
- un logement d'admission d'air 42, délimité en amont par la paroi d'injecteur 31 et en aval par un disque de rotor haute pression 600, le logement d'admission d'air 42 étant en communication fluidique avec l'air en amont de la paroi principale de carter 30 via un injecteur d'air qui présente au moins une entrée d'air d'injecteur 50 ménagée dans la paroi principale de carter 30 et une sortie d'air d'injecteur ménagée dans la paroi d'injecteur 31 ;
- un logement de purge d'air 44 délimité par un disque de rotor haute pression 600 et une paroi sensiblement radiale 33 reliée à la paroi principale de carter 30, la paroi sensiblement radiale 33 étant en outre reliée à la paroi sensiblement axiale 32 ;
- un premier joint d'étanchéité 51 séparant le logement de mélange d'air 41 et le logement d'admission d'air 42, le premier joint d'étanchéité étant formé par une première partie 51a disposée sur une surface du disque de rotor haute pression 600, et une deuxième partie 51b disposée sur un support solidaire de la paroi d'injecteur ;
- un deuxième joint d'étanchéité 52 séparant le logement d'admission d'air et le logement de purge d'air, le deuxième joint d'étanchéité étant formé par une première partie 52a disposée sur une surface du disque de rotor haute pression 600 et une deuxième partie 52b disposée sur la paroi sensiblement axiale ;
le carter d'injection présentant en outre un logement de passage d'air 43 délimité par la paroi sensiblement radiale 33, la paroi principale de carter 30 et la paroi sensiblement axiale 32, le logement de passage d'air 43 étant en communication fluidique avec le logement de mélange d'air 41 via des orifices 62 ménagés dans la paroi sensiblement axiale 32, et en ce que le logement de passage d'air 43 est en communication fluidique avec le logement de purge d'air 44 au moyen d'orifices ménagés dans la paroi sensiblement radiale 63.

Grâce au logement de passage d'air 43 qui permet la mise en communication fluidique du logement de purge d'air 44 et du logement de mélange d'air 41, l'air 401 qui est prélevé en aval du dernier disque du compresseur haute pression 4 ne parvient pas jusqu'au logement d'admission d'air 42.

En effet, en fonctionnement, le logement de purge d'air 44 est en dépression relativement au logement d'admission d'air 42. Cette dépression est assurée par la position du chemin de purge 96 entre le distributeur 601 et le premier disque de rotor 602 de la turbine haute pression 6.

La communication fluidique assurée entre le logement de purge 44 et le logement de mélange d'air 41 via le logement de passage d'air 43 assure le passage de l'air 401 ayant une vitesse faible directement du logement de mélange d'air 41 au logement de purge d'air 44, selon le chemin 95.

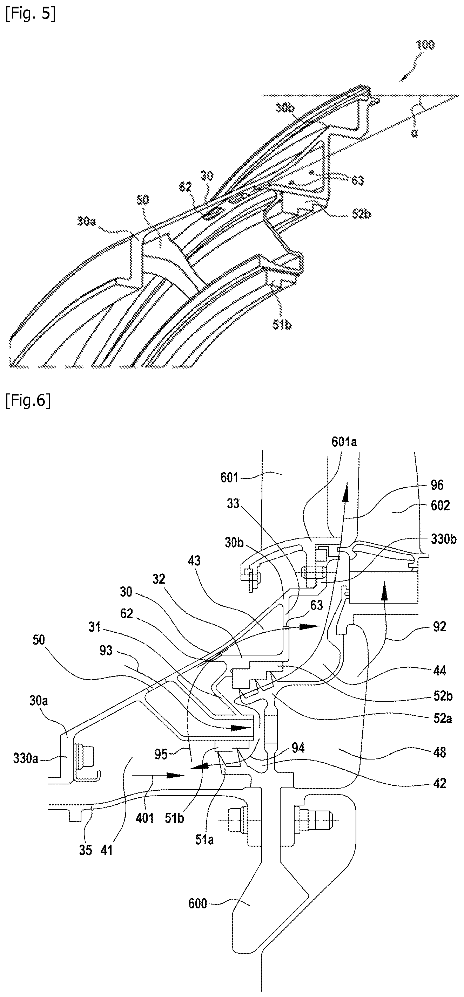

La coupe de la figure 3 ne permet pas de figurer cela précisément mais l'embouchure d'entrée d'air n'empêche par la circulation d'air dans le logement de mélange d'air 41 dans la mesure où elle ne fait que traverser ce dernier. La position tridimensionnelle de l'embouche d'entrée d'air sera plus facilement comprise en lien avec les figures 4 et 5 et l'on comprendra alors mieux comment le chemin 95 existe.

Seul l'air admis par l'embouchure de prélèvement d'air dans le logement d'admission d'air 42, lequel présente une vitesse tangentielle importante peut être admis dans le circuit de refroidissement 92.

En effet, la dépression existante suffit à faire circuler l'air du logement d'admission d'air 42 vers le logement de mélange d'air 41, selon le chemin 94 et non plus l'inverse comme cela était le cas dans les circuits de refroidissement de l'art antérieur, ainsi que représenté en figure 2.

Egalement, les joints d'étanchéité amont 51 et aval 52 assurent une étanchéité suffisante au logement d'admission d'air 42 pour que ce dernier reste en surpression comparativement aux logements de mélange d'air 41, de passage d'air 43 et de purge d'air 44.

Dans le mode de réalisation représenté sur la figure 3, les joints d'étanchéité amont 51 et aval 52 sont des joints à labyrinthes formés par un assemblage entre des léchettes 51a, 52a disposées en regard d'un matériau abradable 51b, 52b par exemple sous forme de nids d'abeilles.

Par exemple, le carter peut être fabriqué par fabrication additive.

Dans un mode de réalisation, l'abradable 51b, 52b peut être un collage de plusieurs feuilles métalliques entre elles l'ensemble étant ensuite rapporté sur le carter.

Dans un mode de réalisation, les orifices 62 ménagés dans la paroi sensiblement axiale 32 permettent un plus grand débit d'air que les orifices 63 ménagés dans la paroi sensiblement radiale 33.

En d'autres termes, ce sont les orifices 63 ménagés dans la paroi sensiblement radiale 33 qui limitent le débit d'air traversant le logement de passage d'air 43.

La comparaison de la figure 2 et de la figure 3 illustre en outre un avantage supplémentaire de l'invention qui est l'absence de la virole servant à délimiter l'embouchure d'entrée d'air ce qui assure un poids diminué du carter d'admission d'air.

Sur la figure 3, le joint d'étanchéité 53 traversé par le flux d'air 401 en provenance du dernier étage du compresseur haute pression 4 (aussi dit joint CDP pour l'acronyme anglais « compressor discharge pressure ») est un joint d'étanchéité dit auto-adaptative, comprenant deux parties 53a et 53b.

Un tel joint se distingue des joints à léchettes en ce qu'il a un mode de fonctionnement dans lequel le jeu du joint est adapté par le comportement dynamique dudit joint.

L'utilisation de tels joints permet déjà de réduire la quantité d'air prélevé en amont 401, ce qui réduit le débit de purge 96 et augmente donc le rendement général de la turbine.

Ce mode de réalisation est avantageux car le jeu que permettent de tels joints est plus réduit que celui des joints à léchettes ce qui réduit le débit d'air parvenant au logement de mélange d'air et facilite la dépressurisation de celui-ci.

Dans d'autres modes de réalisation, les joints d'étanchéité 52 et/ou 53 peuvent également être de tels joints à étanchéité dynamiques, encore dit à étanchéité auto-adaptative.

Dans le mode de réalisation représenté, la paroi d'injecteur 31 n'est pas strictement radiale, mais est bien sensiblement radiale au sens de l'invention.

Dans un mode de réalisation, qui est représenté, les parois sensiblement axiale 32 et sensiblement radiale 33 sont strictement axiales et radiale, c'est-à-dire qu'elles sont strictement droites.

Dans d'autres modes de réalisation, elles peuvent avoir une forme différente d'une forme droite pourvu qu'elles restent respectivement sensiblement axiale et radiale.

La forme particulière de la paroi d'injecteur 31 n'est pas limitative de l'invention pourvu que cette paroi 31 interdise le passage de l'air selon la direction axiale entre les logements de mélange d'air 41 et d'admission d'air 42, qu'elle définit.

Dans le mode de réalisation représenté, la paroi d'injecteur 31 s'étend d'amont en aval puis d'aval en amont lorsqu'on la parcourt de son extrémité interne à son extrémité externe, mais cela n'est pas nécessaire.

Les figures 4 et 5 représentent un carter d'admission d'air dans un mode de réalisation de l'invention, sous deux vues distinctes.

Dans le mode de réalisation représenté, le premier joint d'étanchéité 51 est un joint à labyrinthe dont la cartouche d'abradable 51b est fixée sur l'extrémité interne de la paroi d'injecteur 31.

Dans le mode de réalisation représenté, le deuxième joint d'étanchéité 52 est un joint à labyrinthe dont la cartouche d'abradable 52b est fixée sur la paroi sensiblement axiale 32 du côté du logement d'admission d'air 42.

La figure 5 permet également de faire figurer l'inclinaison a de l'orientation des orifices 62 traversant la paroi sensiblement axiale 32.

L'inclinaison a est mesurée relativement à l'axe A de la turbomachine et , selon l'invention, cette inclinaison est comprise entre 45° et 70°.

Dans le mode de réalisation représenté, les orifices 62 traversant la deuxième paroi 32 sont situés à la jonction de la paroi sensiblement axiale 32 avec la paroi principale 30.

Ce mode de réalisation permet d'assurer un excellent parcours de l'air venant du logement de mélange d'air 41 vers le logement de purge d'air 44 via le logement de passage d'air 43.

Dans un mode de réalisation qui n'est pas celui représenté, les orifices 63 traversant la paroi sensiblement radiale 33 peuvent également être inclinés par rapport à l'axe A de la turbomachine.

Par exemple, les orifices 63 peuvent avoir une inclinaison avec la direction axiale comprise entre 45° et 85°, de préférence entre 70° et 83°.

De préférence l'inclinaison est dans le sens de la composante tangentielle de l'air incident, c'est-à-dire dans le sens de rotation du rotor.

Sur la figure 6, un mode de réalisation d'un carter d'injection d'air, déjà visible en figure 3 est représenté avec plus de détails.

On y voit le carter d'injection d'air ainsi que le chemin de l'air de refroidissement figuré par les flèches 401, 92, 93, 94, 96.

Dans le mode de réalisation représenté, l'extrémité amont de carter 30a comprend une bride d'attache 330a, l'élément auquel elle est lié n'étant pas représenté ici. Ce dernier peut toutefois être solidaire d'une paroi de la chambre de combustion, comme cela était d'ailleurs visible sur la vue plus large en figure 3.

Dans le mode de réalisation représenté, l'extrémité aval de carter 30b comprend une bride d'attache 330b. Cette dernière peut être attachée à un pied 601a du distributeur 601.

Sur la représentation de la figure 6, on voit encore que les parties 51a et 52a des joints d'étanchéités 51 et 52, utiles pour la séparation entre les logements d'admission d'air 42 et respectivement le logement de mélange d'air 41 et le logement de purge d'air 44 sont portés par le rotor 600 d'une turbine haute pression.

Egalement, la figure 6 illustre, si cela était nécessaire, qu'une virole 35 peut délimiter axialement le logement de mélange d'air et conduire l'air 401 depuis le prélèvement après le dernier disque mobile de compresseur haute pression jusqu'au logement de mélange 42.

Dans un mode de réalisation un élément du rotor, par exemple une virole 35 délimite radialement au plus proche de l'axe A le logement de mélange d'air.

La figure 6 illustre en pointillé que le chemin 95 de l'air du logement de mélange d'air 41 vers le logement de purge d'air 44 via le logement de mélange d'air 43 n'est pas bloqué par l'embouchure d'entrée d'air. En effet, bien que la représentation de l'embouchure en deux dimensions sur les figures 3 ou 6 laisse penser que la communication n'est pas possible, les représentations en trois dimensions aux figures 4 et 5 montrent bien que l'air 95 peut circuler autour de l'embouchure.

En outre, la représentation de la figure 6 ne représente qu'une embouchure, mais il est préférable que l'injecteur en comprenne une pluralité, réparties angulairement autour de l'axe principal du carter.

On voit encore sur la figure 6 que le logement d'admission d'air 42 est en communication fluidique avec un logement 48 de refroidissement, via une ouverture ménagée dans le disque de rotor 600 portant l'aube mobile 602 de la turbine haute pression.

Ce logement 48 en communication fluidique avec le logement d'admission d'air 42, assure que l'air de refroidissement pénétrant dans ce logement 48, et provenant de l'air 93 prélevé sous la chambre de combustion au moyen de l'embouchure d'entrée d'air assure que l'air utilisé pour le refroidissement des pièces chaudes 92 ait une vitesse tangentielle importante, ce qui assure un meilleur refroidissement des pièces.

## Revendications

1. Carter d'injection d'air de refroidissement (100) pour turbomachine, le carter présentant une forme annulaire autour d'un axe longitudinal (A) définissant une direction axiale (D_{A}) et comprenant une extrémité amont de carter (30a), une extrémité aval de carter (30b) et une paroi principale de carter (30) qui relie l'extrémité amont de carter à l'extrémité aval de carter, la paroi principale de carter (30) présentant une forme annulaire avec un diamètre qui s'agrandit de l'amont vers l'aval, le carter comprenant en outre :
- un logement de mélange d'air (41), délimité axialement par la paroi principale du carter depuis son extrémité amont (30a) et par une paroi d'injecteur (31) qui s'étend vers l'axe longitudinal (A) depuis une paroi sensiblement axiale (32), laquelle est reliée à son extrémité amont à la paroi principale du carter (30) et délimite radialement le logement de mélange d'air ;
- un logement d'admission d'air (42), délimité en amont par la paroi d'injecteur (31) et en aval par un disque de rotor haute pression (600) de la turbomachine, le logement d'admission d'air (42) étant en communication fluidique avec l'air en amont de la paroi principale de carter (30) via un injecteur d'air qui présente au moins une entrée d'air d'injecteur (50) ménagée dans la paroi principale de carter (30) et une sortie d'air d'injecteur ménagée dans la paroi d'injecteur (31) ;
- un logement de purge d'air (44) délimité par un disque de rotor haute pression (600) de la turbomachine et une paroi sensiblement radiale (33) reliée à la paroi principale de carter (30), la paroi sensiblement radiale (33) étant en outre reliée à la paroi sensiblement axiale (32) ;
- un premier joint d'étanchéité (51) séparant le logement de mélange d'air (41) et le logement d'admission d'air (42) ;
- un deuxième joint d'étanchéité (52) séparant le logement d'admission d'air (42) et le logement de purge d'air (44) ;
le carter d'injection présentant en outre un logement de passage d'air (43) délimité par la paroi sensiblement radiale (33), la paroi principale de carter (30) et la paroi sensiblement axiale (32), le logement de passage d'air (43) étant en communication fluidique avec le logement de purge d'air (44) au moyen d'orifices ménagés dans la paroi sensiblement radiale (63), **caractérisé en ce que** le logement de passage d'air (43) est en communication fluidique avec le logement de mélange d'air (41) via des orifices (62) ménagés dans la paroi sensiblement axiale (32) et **en ce que** les orifices traversant la paroi sensiblement axiale (32) présentent une inclinaison (α) avec la direction axiale (D_{A}) comprise entre 45° et 70°.

2. Carter d'injection d'air de refroidissement (100) selon la revendication 1, dans lequel les orifices traversant la paroi sensiblement axiale (32) sont situés à la jonction de la paroi sensiblement axiale avec la paroi principale (30).

3. Carter d'injection d'air de refroidissement (100) selon l'une quelconque des revendications 1 ou 2, dans lequel les orifices (63) traversant la paroi sensiblement radiale (33) présentent une inclinaison avec la direction axiale (D_{A}) comprise entre 45° et 85°.

4. Carter d'injection d'air de refroidissement (100) selon l'une quelconque des revendications 1 à 3, dans lequel les orifices traversant la paroi sensiblement radiale (33) présentent un diamètre compris entre 1 mm et 5 mm.

5. Carter d'injection d'air de refroidissement (100) selon l'une quelconque des revendications 1 à 4, dans lequel les orifices traversant la paroi sensiblement radiale (33) sont placés dans une partie radialement externe de la paroi sensiblement radiale (33).

6. Carter d'injection d'air de refroidissement (100) selon l'une quelconque des revendications 1 à 5, dans lequel le premier joint d'étanchéité (51) est un joint d'étanchéité qui comprend un élément d'étanchéité (51b) monté sur l'extrémité radialement interne de la paroi d'injecteur (31).

7. Carter d'injection d'air de refroidissement (100) selon l'une quelconque des revendications 1 à 6, dans lequel le deuxième joint d'étanchéité (52) est un joint d'étanchéité qui comprend un élément d'étanchéité (52b) monté sur la paroi sensiblement axiale (32) du côté du logement d'admission d'air (42).

8. Turbomachine aéronautique comprenant un rotor (600) et un carter d'injection d'air de refroidissement selon l'une quelconque des revendications 1 à 7 qui s'étend autour du rotor, le rotor comprenant un disque de rotor haute pression (600) qui délimite le logement d'admission d'air (42) et le logement de purge d'air (44), le carter d'injection d'air de refroidissement étant disposé en amont du disque de rotor de turbine haute pression (6).

9. Turbomachine aéronautique selon la revendication 8, dans laquelle la turbine haute pression (6) est une turbine haute pression monoétage ou bi-étage.

## Patentansprüche

1. Kühlungslufteinspritzgehäuse (100) für eine Turbomaschine, wobei das Gehäuse eine ringförmige Gestalt um eine Längsachse (A) aufweist, die eine axiale Richtung (D_{A}) definiert, und eine Gehäusevorderseite (30a), eine Gehäuserückseite (30b) sowie eine Hauptgehäusewand (30) umfasst, die die Gehäusevorderseite mit der Gehäuserückseite verbindet, wobei die Hauptgehäusewand (30) eine ringförmige Gestalt mit einem Durchmesser aufweist, der sich von stromauf nach stromab vergrößert, wobei das Gehäuse ferner umfasst:
- einen Luftmischraum (41), der axial durch die Hauptgehäusewand des Gehäuses von deren Vorderseite (30a) und durch eine Einspritzwand (31) begrenzt ist, die sich in Richtung der Längsachse (A) von einer im Wesentlichen axialen Wand (32) erstreckt, die an ihrem vorderen Ende mit der Hauptgehäusewand (30) verbunden ist und den Luftmischraum radial begrenzt,
- einen Lufteinlassraum (42), der stromauf durch die Einspritzwand (31) und stromab durch eine Hochdruckrotorscheibe (600) der Turbomaschine begrenzt ist, wobei der Lufteinlassraum (42) fluidisch mit der Luft stromauf der Hauptgehäusewand (30) über einen Lufteinspritzer kommuniziert, der mindestens einen Lufteinspritzeinlass (50) aufweist, der in der Hauptgehäusewand (30) eingerichtet ist, und einen Lufteinspritzauslass, der in der Einspritzwand (31) eingerichtet ist;
- einen Luftspülraum (44), der durch eine Hochdruckrotorscheibe (600) der Turbomaschine und eine im Wesentlichen radiale Wand (33) begrenzt ist, die mit der Hauptgehäusewand (30) verbunden ist, wobei die im Wesentlichen radiale Wand (33) ferner mit der im Wesentlichen axialen Wand (32) verbunden ist;
- eine erste Dichtung (51), die den Luftmischraum (41) und den Lufteinlassraum (42) trennt;
- eine zweite Dichtung (52), die den Lufteinlassraum (42) und den Luftspülraum (44) trennt;
wobei das Einspritzgehäuse ferner einen Luftdurchgangsraum (43) aufweist, der durch die im Wesentlichen radiale Wand (33), die Hauptgehäusewand (30) und die im Wesentlichen axiale Wand (32) begrenzt ist, wobei der Luftdurchgangsraum (43) fluidisch mit dem Luftspülraum (44) über in der im Wesentlichen radialen Wand (63) eingerichtete Öffnungen kommuniziert, **dadurch gekennzeichnet, dass** der Luftdurchgangsraum (43) fluidisch mit dem Luftmischraum (41) über in der im Wesentlichen axialen Wand (32) eingerichtete Öffnungen (62) kommuniziert und dass die die im Wesentlichen axiale Wand (32) durchquerenden Öffnungen eine Neigung (α) zu der axialen Richtung (D_{A}) zwischen 45° und 70° aufweisen.

2. Kühlungslufteinspritzgehäuse (100) nach Anspruch 1, wobei die die im Wesentlichen axiale Wand (32) durchquerenden Öffnungen an der Verbindung der im Wesentlichen axialen Wand mit der Hauptgehäusewand (30) angeordnet sind.

3. Kühlungslufteinspritzgehäuse (100) nach einem der Ansprüche 1 oder 2, wobei die die im Wesentlichen radiale Wand (33) durchquerenden Öffnungen (63) eine Neigung zu der axialen Richtung (D_{A}) zwischen 45° und 85° aufweisen.

4. Kühlungslufteinspritzgehäuse (100) nach einem der Ansprüche 1 bis 3, wobei die die im Wesentlichen radiale Wand (33) durchquerenden Öffnungen einen Durchmesser zwischen 1 mm und 5 mm aufweisen.

5. Kühlungslufteinspritzgehäuse (100) nach einem der Ansprüche 1 bis 4, wobei die die im Wesentlichen radiale Wand (33) durchquerenden Öffnungen in einem radial äußeren Bereich der im Wesentlichen radialen Wand (33) angeordnet sind.

6. Kühlungslufteinspritzgehäuse (100) nach einem der Ansprüche 1 bis 5, wobei die erste Dichtung (51) eine Dichtung ist, die ein Dichtungselement (51b) umfasst, das an dem radial inneren Ende der Einspritzwand (31) angebracht ist.

7. Kühlungslufteinspritzgehäuse (100) nach einem der Ansprüche 1 bis 6, wobei die zweite Dichtung (52) eine Dichtung ist, die ein Dichtungselement (52b) umfasst, das an der im Wesentlichen axialen Wand (32) auf der Seite des Lufteinlassraums (42) angebracht ist.

8. Luftfahrtturbomaschine, die einen Rotor (600) und ein Kühlungslufteinspritzgehäuse nach einem der Ansprüche 1 bis 7 umfasst, das sich um den Rotor erstreckt, wobei der Rotor eine Hochdruckrotorscheibe (600) umfasst, die den Lufteinlassraum (42) und den Luftspülraum (44) begrenzt, wobei das Kühlungslufteinspritzgehäuse stromauf der Hochdruckturbinenrotorscheibe (6) angeordnet ist.

9. Luftfahrtturbomaschine nach Anspruch 8, wobei die Hochdruckturbine (6) eine ein- oder zweistufige Hochdruckturbine ist.

## Claims

1. A cooling-air injection casing (100) for turbomachine, the casing having an annular shape around a longitudinal axis (A) defining an axial direction (D_{A}) and comprising a casing upstream end (30a), a casing downstream end (30b) and a casing main wall (30) which connects the upstream casing end with the downstream casing end, the casing main wall (30) having an annular shape with a diameter that increases from upstream to downstream, the casing further comprising:
- an air mixing cavity (41), bounded axially by the casing main wall from its upstream end (30a) and by an injector wall (31) which extends toward the longitudinal axis (A) from a substantially axial wall (32) whose upstream end is connected to the casing main wall (30) and which radially bounds the air mixing cavity;
- an air intake cavity (42), bounded upstream by the injector wall (31) and downstream by a high-pressure rotor disk (600) of the turbomachine, the air intake cavity (42) being in fluid communication with the air upstream of the casing main wall (30) via an air injector which has at least one air injector inlet (50) made in the casing main wall (30) and an air injector outlet made in the injector wall (31);
- an air bleeding cavity (44) bounded by a high-pressure rotor disk (600) of the turbomachine and a substantially radial wall (33) connected to the casing main wall (30), the substantially radial wall (33) being further connected to the substantially radial wall (32);
- a first sealing gasket (51) separating the air mixing cavity (41) and the air intake cavity (42);
- a second sealing gasket (52) separating the air intake cavity (42) and the air bleeding cavity (44);
the injection casing further having an air passage cavity (43) bounded by the substantially radial wall (33), the casing main wall (30) and the substantially axial wall (32), the air passage cavity (43) being in fluid communication with the air mixing cavity (41) via apertures (62) made in the substantially axial wall (32), and in that the air passage cavity (43) is in fluid communication with the air bleeding cavity (44) by means of apertures made in the substantially radial wall (63) and wherein the apertures passing through the substantially axial wall (32) have an inclination (α) to the axial direction (D_{A}) comprised between 45° and 70°.

2. The cooling-air injection casing (100) according to claim 1, wherein the apertures passing through the substantially axial wall (32) are located at the junction of the substantially axial wall with the main wall (30).

3. The cooling-air injection casing (100) according to any one of claims 1 or 2, wherein the apertures (63) passing through the substantially axial wall (33) have an inclination to the axial direction (D_{A}) comprised between 45° and 85°.

4. The cooling-air injection casing according to any one of claims 1 to 3, wherein the apertures passing through the substantially radial wall (33) have a diameter comprised between 1 mm and 5 mm.

5. The cooling-air injection casing (100) according to any one of claims 1 to 4, wherein the apertures passing through the substantially radial wall (33) are placed in a radially external portion of the substantially radial wall (33).

6. The cooling-air injection casing (100) according to any one of claims 1 to 5, wherein the first sealing gasket (51) is a sealing gasket that comprises a sealing element (51b) mounted on the radially internal end of the injector wall (31).

7. The cooling-air injection casing (100) according to any one of claims 1 to 6, wherein the second sealing gasket (52) is a sealing gasket which comprises a sealing element (52b) mounted on the substantially axial wall (32) on the side of the air intake cavity (42).

8. An aeronautical turbomachine comprising a rotor (600) and a cooling-air injection casing according to any one of claims 1 to 7 which extends around the rotor, the rotor comprising a high-pressure rotor disk (600) which bounds the air intake cavity (42) and the air bleeding cavity (44), the cooling-air injection casing being located upstream of the high-pressure turbine rotor (6).

9. The aeronautical turbomachine according to claim 8, wherein the high-pressure turbine (6) is a single-stage or two-stage high-pressure turbine.
